# EUROPEAN PATENT SPECIFICATION

(11) **EP 2 851 840 B1**
(45) Date of publication and mention of the grant of the patent: **25.03.2020**
(21) Application number: 13185765.8
(22) Date of filing: 24.09.2013
(51) Int. Cl.: G06K 9/00, G06K 9/62

(54) **Vision system and vision method for a motor vehicle**
Sichtsystem und -verfahren für ein Kraftfahrzeug
Système et procédé de vision pour véhicule à moteur

(43) Date of publication of application: 25.03.2015
(73) Proprietor: Veoneer Sweden AB, 447 83 Vårgårda (SE)
(72) Inventor: Forslund, David, 58432 Linköping (SE); Wernholt, Erik, 58729 Linköping (SE)
(74) Representative: Müller Verweyen

(56) References cited:
- EP-A1- 2 624 169
- WO-A2-2006/026688
- DE-A1-102007 024 641

## Description

The invention relates to a vision system for a motor vehicle according to the preamble of claim 1. The invention furthermore relates to a corresponding vision method.

Vision systems of this kind are generally known. An inherent problem of such systems are so-called false positive detections, i.e. objects which have been (falsely) estimated by the detection and estimation means as requiring a safety action, although in truth the detected object does not require a safety action (because, for example, there really is no danger of collision unlike estimated by the detection and estimation means). For example, stationary objects like street signs on the side of the road or bridge foundations stretching over the road may be regarded as pedestrians by the object detection and estimation means. Corresponding false warnings may undermine the trust of the driver in the vision system, while false actions like automatic braking and/or steering may have even more severe consequences. Since a vision system cannot always separate a true object from a false object, and a high true positive object detection rate is desired, some false positives will be detected. In practice, a reasonable compromise between a low false positive detection rate and a high true positive detection rate must be made. However, this means that the false positive detection rate is not strictly zero. The reason for most false positive detections is that the time until a decision must be made (decision horizon) as well as the processing resources are limited in a moving vehicle. A false positive detection initiates an unnecessary safety action which, as already mentioned, in the case of a warning may distract the driver, or even involve more severe risks, for example in case of automatic braking, steering or activation of restraint systems like airbags.

WO 2006/026688 A2 discloses a vision system for a motor vehicle according to the preamble of claim 1.

The problem underlying the present invention is to provide a vision system and method with reduced false positive detection probability.

The invention solves this problem with the features of the independent claims. Through the performing of an analysis to determine whether an object has been falsely estimated as a positive object by the detection and estimation means, false positive detections can be revealed with higher certainty. By storing data depending on the result of the false positive analysis in a data storage means and using said stored data in future object detection and estimation, future false positive detections and corresponding recurrent safety actions on similar false objects can be reduced. Due to the invention, the overall number of incorrect safety actions can be substantially reduced. The invention is particularly efficient when the vehicle at a later time passes a physical object that has previously generated a false positive. Therefore, the invention can be especially helpful in situations where false positive detections on the same type of object occur frequently, for example when driving the same route several times or regularly.

The invention has realized that, although at the time of identifying a false positive in the false positive analysis it may be too late to suppress a corresponding safety action for a particular analysed object, in the long run the false positive rate can nevertheless be reduced because in similar or corresponding situations a false positive detection can be identified through the stored result of a previous false positive analysis, and an unnecessary safety action can be suppressed at the later time.

Since the false positive analysis can advantageously be performed in a longer time frame than the real-time estimation, the false positive analysis can preferably take place, or at least extend, beyond a decision horizon of the detection and estimation means. The false positive analysis means can preferably use image data collected during a longer time period, and/or at smaller distances to the object, as compared to the image data used by the detection and estimation means. Advantageously, the false positive analysis means can use larger computational resources as compared to the detection and estimation means.

All of these preferred aspects are possible since the analysis means does not have to make a near-real-time decision about a safety action for the currently analysed object. For example, the false positive analysis can advantageously be performed at least partly or even completely in times where the vehicle stands, when no objects are detected, and/or when the risk of collision for the driver is estimated to be low.

The data storage means preferably comprises a false positive database where object description data of all objects previously identified as false positive in the analysis means are stored.

The prevention of later false positive detections is preferably realized by a comparison performed in the detection and estimation means of the data stored in the storage means and corresponding data of a currently detected object. The comparison expediently takes place before the decision horizon of a currently detected object. In one embodiment of the invention, the comparison is based on comparing a feature vector of the currently detected object and a feature vector of an analysed object stored in the storage means. The feature vector may preferably be a previously computed feature vector, for example a feature vector computed in a classifier. However, this is not mandatory; the feature vector can be any other suited feature vector. In general, the comparison is preferably based on one or more of: comparing feature vectors of said currently detected object and said object for which data are stored in said storage means; comparing weather conditions at the time of detecting said currently detected object to the weather conditions at the time of detecting an object for which data is stored in said storage means; comparing the image information of said currently detected object and said object for which data are stored in said storage means; comparing the estimated position of said currently detected object and said object for which data are stored in said storage means; comparing the estimated pose of said currently detected object and said object for which data are stored in said storage means; comparing the estimated appearance of said currently detected object and said object for which data are stored in said storage means; and/or comparing the estimated motion of said currently detected object and said object for which data are stored in said storage means.

Preferably the stored data comprises object description data of the analysed object. In a preferred embodiment, the object description data comprises a vehicle position from a vehicle mounted navigation satellite system receiver at the time of detecting the analysed object. This allows the above mentioned comparison to be performed when the vehicle is close to the position of an object for which data are stored in said storage means.

Preferably, the object description data comprises one or more of the following data: object position relative to motor vehicle; a position from a vehicle based navigation satellite system receiver; object pose; object motion; object appearance; image information relating to the object from the imaging means; object position in the image; object type, i.e., probability that the object belongs to a certain class of objects, advantageously for all object classes targeted by the vision system; environmental data at the time of object detection; a time at which the object was detected; vehicle motion data at the time of object detection; and a feature vector of the analysed object.

Another advantageous option could be to gather data, including the result of the analysis in the analysis means, in situations where the system is unsure about the positive / negative object decision, and send this data to the manufacturer. In this manner, for example, future system updates by the manufacturer can be supported by improving future detection, estimation and analysis algorithms.

It may also be possible that the driver can provide input to the system, for example by pushing a false safety action button when the driver thinks that a false safety action, like a false warning, was executed. In one embodiment, the driver input by a button press can be used by the analysis means to identify the detected object as a false positive object.

In the following the invention shall be illustrated on the basis of preferred embodiments with reference to the accompanying drawings, wherein:
- Fig. 1: shows a schematic illustration of a vision system according to the invention;
- Fig. 2: shows a schematic diagram illustrating components and process steps according to the invention; and
- Fig. 3: shows a time line of events in the electronic processing means.

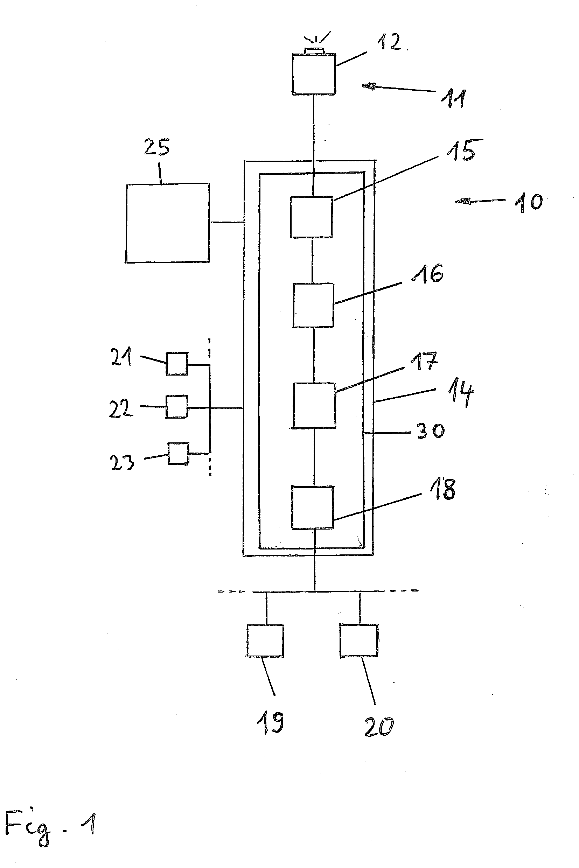

The vision system 10 as depicted in Fig. 1 is mounted in a motor vehicle and comprises an imaging means 11 for acquiring images of a region surrounding the motor vehicle, for example a region in front of the motor vehicle. Preferably the imaging means 11 comprises one or more optical and/or infrared imaging devices 12, in particular cameras, where infrared covers near IR with wavelengths below 5 microns and/or far IR with wavelengths beyond 5 microns. In one embodiment the imaging means 11 comprises a plurality, in particular two imaging devices 12 expediently forming a stereo imaging means 11. In this case an image pre-processor adapted to warp pairs of left/right images into alignment and/or create disparity images may preferably be provided between the imaging means 11 and the electronic processing means 14. In an alternative embodiment only one imaging device 12 forming a mono imaging means can be used. In this case, a pre-processor is generally not required.

The image data acquired by the imaging means 11 is provided to an electronic processing means 14 where image and data processing is carried out by corresponding software. The processing means 14 comprises an object detection and estimation means 30 with an object detection means 15 adapted to identify and preferably also classify possible objects in front of the motor vehicle, such as pedestrians, other vehicles, bicyclists or large animals, a tracking means 16 adapted to track over time the position of object candidates in the recorded images identified by the object detection means 15, a classifier 17 adapted to classify a detected object into one or more categories like pedestrian, bicyclist or large animal and outputting a corresponding classifier feature vector, and an estimation and decision means 18 adapted to estimate a collision probability, or generally a situation requiring a safety action, with respect to a detected / tracked object and to activate or control at least one driver assistance means 19, 20, ... depending on the estimation. The driver assistance means 19, 20, ... may in particular comprise a display means 19 for displaying information or warnings relating to a detected object. However, the invention is not limited to a display means. The driver assistance means 19, 20 may in addition or alternatively comprise a warning means adapted to provide a safety warning to the driver by suitable optical, acoustical and/or haptical warning signals; one or more restraint systems such as occupant airbags or safety belt tensioners, pedestrian airbags, hood lifters and the like; and/or dynamic vehicle control systems such as brakes or steering means. The processing means 14 expediently has access to an electronic memory means 25 and/or external sensors and/or devices like a satellite navigation device 21, vehicle dynamics sensors 22, for example vehicle speed sensor, accelerometers, pitch sensor, roll sensor, and/or environmental data sensors 23 like temperature sensor, humidity sensor, ambient light sensor, rain or precipitation sensor.

The electronic processing means 14 is preferably programmed or programmable and expediently comprises a microprocessor or micro-controller. The electronic processing means 14 can preferably be realized in a digital signal processor (DSP). The electronic processing means 14 and the memory means 25 are preferably realized in an on-board electronic control unit (ECU) and may be connected to the imaging means 11 via a separate cable or a vehicle data bus. In another embodiment the ECU and one or more of the imaging devices 12 can be integrated into a single unit, where a one box solution including the ECU and all imaging devices 12 can be preferred.

All steps carried out by the elements illustrated in Figure 1 from imaging, image processing to activation or control of driver assistance means 19, 20 are performed automatically and continuously during driving in real time.

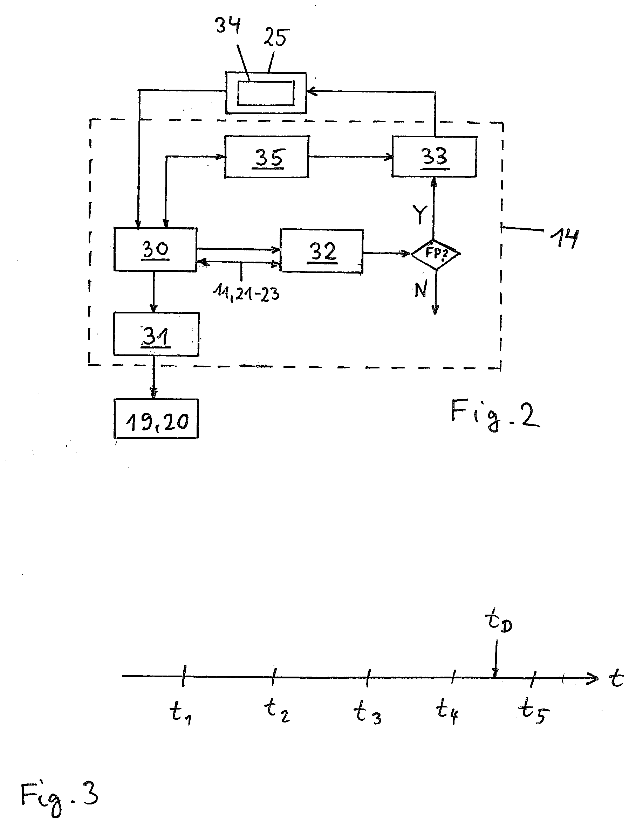

A scheme illustrating the present invention is depicted in Figure 2. It shows the detection and estimation means 30 also depicted in Figure 1. When the estimation and decision means 18 estimates a situation requiring a safety action with respect to a detected object, a corresponding safety action 31 is initiated, in particular by activating one or more of the driver assistance means 19, 20, ... shown in Figure 1. This is also illustrated on the time arrow in Figure 3, where t1 indicates a time of detecting a particular object, t2 indicates an information to the user regarding the detected object, for example to be displayed on the display means 19, t3 indicates a warning to the user in the case of a dangerous or potentially dangerous situation with respect to the detected object, for example to be displayed on the display means 19, and t4 indicates a prevention or mitigation action in particular order to avoid a collision with the detected object, for example through automatic braking and/or steering. All of the measures at t1 to t4 are safety actions according to the invention, and take place in real time or near-real time before a decision horizon or latest decision time tD. It is understood that generally the above described safety actions have different decision horizons; however, in the following only one decision horizon is considered for simplicity. The decision horizon marks the point in time until which a decision must be made in order to have a desired influence on the vehicle safety with respect to a particular detected object, in particular in order to avoid a collision with the object. All measures initiated after the decision horizon tD may generally be too late to have a desired influence on the vehicle safety with respect to a particular detected object, in particular in order to avoid a collision with the object. Such measures taking place after, or extending beyond, the decision horizon tD may be called long-term measures.

When the estimation and decision means 18 estimates a situation requiring a safety action with respect to a detected object, this object may be denoted "positive". According to the invention, each object estimated positive in the detection and estimation means 30 is further analysed in the analysis means 32, as will be described in detail below. The analysis means 32 has access to a plurality of information sources which may comprise the image, sensor and other device data relating to the positive object to be analyzed on which the estimation of the detection and estimation means 30 was based. Advantageously the analysis means 32 may have access to additional image, sensor and/or other device data. For example, the analysis means 32 may use image data collected during a longer time period, and/or at smaller distances to the object, as compared to the image data used by the detection and estimation means 30. Furthermore, the analysis means 32 may use information from the other sensors or systems 21, 22, 23, as indicated in Figure 2.

The analysis performed by the analysis means 32 takes place at, or extends to, a time t5 which may be after the decision horizon tD as indicated in Figure 3. For example, the analysis may be performed after the detected object has already been passed by the vehicle. Therefore, the result of the analysis performed by the analysis means 32 may be obtained too late for initiating or aborting a safety action with respect to the analysed object. On the other hand, this allows spending a much longer time on the analysis in the analysis means 32 as compared to the time available in the object detection and estimation means 30. For example, the analysis may be performed partly or wholly in times when the vehicle stands, like at red lights or while parking, when no objects are detected, and/or when the risk of collision for the driver is estimated to be low. In such situations the processing resources assigned to the analysis means 32 are not reducing the capabilities of the object detection and estimation means 30. Generally, the analysis means 32 can use larger computational resources as compared to the object detection and estimation means 30.

The analysis means 32 performs an in-depth and preferably long-term analysis whether or not the estimation of an object to be positive by the object detection and estimation means 30 was incorrect. Due to the larger processing resources and/or larger time period and/or information from additional sensors available to the analysis means 32 in comparison to the object detection and estimation means 30, the analysis performed in the analysis means 32 is more precise and reliable than the estimation performed in the object detection and estimation means 30. When the analysis means 32 finds that the estimation of an object to be positive by the object detection and estimation means 30 was incorrect (arrow "Y" in Figure 2), the object is denoted a "false positive" (FP). Therefore, the analysis performed in the analysis means 32 may be denoted a false positive analysis, and the analysis means 32 may be denoted a false positive analysis means 32.

In the event that a false positive is found or identified, a result of the false positive analysis, or false positive information, is stored in step 33 in the memory means 25. In a preferred embodiment, object description data of each false positive object is stored in the memory means 25. In a preferred embodiment, the memory means 25 comprises a false positive database 34 containing object description data of each false positive object.

The object description data of a false positive object to be stored in the memory 25 is obtained from an object description data generator 35. The object description data generator 35 generates, and preferably buffers, object description data for each object which has been estimated positive by the object detection and estimation means 30. In case an object has been identified as false positive by the analysis means 32, the corresponding object description data of the false positive object is fetched from the object description data generator 35 in step 33 and stored in the memory means 25, in particular in the false positive database 34.

Like the detection and estimation means 30, the safety action 31, the analysis means 32, the false positive information storing step 33 and the object description generator 35 are software items to be executed in the electronic processing means 14. The safety action 31, the analysis means 32, the false positive information storing step 33 and the object description generator 35 are not shown in Figure 1 for reasons of simplicity.

The object description data of each object stored in the memory means 25 preferably comprises a position derived from a navigation satellite system receiver at the time of detecting the object. This may be a vehicle position, or an object position estimated from the vehicle position. The object description data of each object stored in the memory means 25 preferably comprises a feature vector of the object, here for example the classifier feature vector from the object classifier 17. The object description data of each object stored in the memory means 25 preferably comprises any combination of an object position relative to motor vehicle, as may be derived from the image data or from a distance sensor; an object pose, motion or appearance, as may be derived from the image data; generally image information relating to the object from the imaging means; an object position in the image; an object type as determined by the classifier 17; environmental data at the time of object detection, in particular from external sensors 23; a time at which the object was detected; and/or vehicle motion data at the time of object detection, in particular from external sensors 22.

From the above it follows that a list of false positive objects identified in previous analysis is stored in the memory means 25 / the false positive database 34. This information can be used in the object detection and estimation means 30 in order to avoid future false positive estimations, i.e. to avoid recurrent false positive estimations on already identified false positive objects. Also objects which are similar to any object in the false positive database may be removed. For this reason, the object detection and estimation means 30 uses the FP database 34 in the memory 25 as input. For example, as soon as the vehicle position, as output from a navigation satellite system receiver, is close to a stored position of an object stored in the false positive database 34, a detected object may be regarded as a false positive. Preferably, apart from comparing the current (vehicle) position with the stored (vehicle) positions, a further comparison is carried out in order to ensure that a currently detected object really originates from the same physical object in the environment as the false positive object stored in the memory means 25. In one embodiment, for example, as soon as the vehicle position is close to a stored position of an object stored in the false positive database 34, the feature vector of the current object under estimation in the object detection and estimation means 30 is compared to the feature vector of the object stored in the memory means 25 being close to the current vehicle position. Only if the feature vectors are found to be identical or reasonably similar, the currently detected object is considered to be negative and will therefore be suppressed, such that no safety action 31 is carried out with respect to the currently detected object. The above described safing routine is not limited to use a feature vector, but can additionally or alternatively be based on other object description data as listed above.

As described above, the analysis in the analysis means 32 as well as the storing 33 of the false positive information / false positive object description data may preferably be long-term measures extending beyond the decision horizon tD of the object detection and estimation means 30. However, it can also be possible that the false positive analysis of a detected object in the analysis means 32 can be finished before the decision horizon tD of the object detection and estimation means 30. In that case, of course, the analysis means 32 would cause a suppression of a safety action relating to an identified false positive object.

In the case of a true positive, i.e. when the analysis means 32 finds that the estimation of an object to be positive by the object detection and estimation means 30 was indeed correct (arrow "N" in Figure 2), a number of proceedings are possible. One possible action is simply to end the current analysis and not taking any further action, in particular not storing any information in the memory means 25. Another possibility is to store data depending on the result of the true positive analysis in the memory means 25, for example object description data of the true positive object, preferably together with the marking "true positive". Finally, if the analysis can be finished before the decision horizon tD of the object detection and estimation means 30, a corresponding safety action 31 could be released by the analysis means 32. The safety action 31 may also affect the detection and/or estimation in the object detection and estimation means 30, and/or the analysis in the analysis means 32, for example by assigning more processing power to objects for which a certain action is carried out, or about to be carried out.

## Claims

1. A vision system (10) for a motor vehicle, comprising an imaging means (11) adapted to gather images from a region surrounding the motor vehicle, an electronic processing means (14) adapted to perform image processing of images gathered by said imaging means (11) and initiate a safety action based on the result of said image processing, a data storage means (25), and an on-board electronic control unit, wherein said electronic processing means (14) and said data storage means (25) are realized in said on-board electronic control unit, wherein said electronic processing means (14) comprises a detection and estimation means (30) adapted to detect an object in the surrounding of the motor vehicle through said image processing and to estimate whether a detected object is a positive object requiring a safety action, **characterized in that** said electronic processing means (14) comprises a false positive analysis means (32) adapted to perform an analysis to determine whether an object has been falsely estimated as a positive object by the detection and estimation means (30), to store data depending on the result of the false positive analysis in said data storage means (25), and to use said stored data in said detection and estimation means (30) for future object detection and estimation, wherein a prevention of false positive detections is realized by a comparison performed in said detection and estimation means (30) between said data stored in said storage means (25) and corresponding data of a currently detected object, wherein said comparison is based on one or more of
- comparing feature vectors of said currently detected object and said object for which data are stored in said storage means (25);
- comparing weather conditions at the time of detecting said currently detected object to the weather conditions at the time of detecting an object for which data is stored in said storage means (25);
- comparing the image information of said currently detected object and said object for which data are stored in said storage means (25);
- comparing the estimated position of said currently detected object and said object for which data are stored in said storage means (25);
comparing the estimated pose of said currently detected object and said object for which data are stored in said storage means;
- comparing the estimated appearance of said currently detected object and said object for which data are stored in said storage means (25); and/or
- comparing the estimated motion of said currently detected object and said object for which data are stored in said storage means (25).

2. The vision system as claimed in claim 1, wherein said false positive analysis extends beyond a decision horizon of the detection and estimation means (30).

3. The vision system as claimed in any one of the preceding claims, wherein said false positive analysis means (32) uses image data collected during a longer time period compared to the image data used by the detection and estimation means (30).

4. The vision system as claimed in any one of the preceding claims, wherein said false positive analysis means (32) uses image data collected at smaller distances to the object as compared to the image data used by the detection and estimation means (30).

5. The vision system as claimed in any one of the preceding claims, wherein said false positive analysis means (32) uses larger computational resources as compared to the detection and estimation means (30).

6. The vision system as claimed in any one of the preceding claims, wherein said false positive analysis means (32) uses information from other sensors or systems (21-23).

7. The vision system as claimed in any one of the preceding claims, wherein said stored data comprises object description data of the analysed object.

8. The vision system as claimed in claim 7, wherein said object description data comprises a position derived from a navigation satellite system receiver (21) at the time of detecting the analysed object.

9. The vision system as claimed in claim 7 or 8, wherein said object description data comprises one or more of the following data:
- object position relative to motor vehicle;
- object pose;
- object motion;
- object appearance;
- image information relating to the object from the imaging means;
- object position in the image;
- object type;
- environmental data at the time of object detection;
- vehicle motion data at the time of object detection;
- a time at which the object was detected; and
- a feature vector of the object.

10. The vision system as claimed in any one of the preceding claims, wherein said comparison is performed if the vehicle is close to the position of an object for which data are stored in said storage means (25).

11. The vision system as claimed in any one of the preceding claims, wherein said analysis is at least partly performed
- in times of vehicle standing;
- when no objects are detected; and/or
- when the risk of collision for the driver is estimated to be low.

12. The vision system as claimed in any one of the preceding claims, wherein said data storage means (25) comprises a false positive database (34).

13. A vision method for a motor vehicle, performed in an on-board electronic control unit, comprising gathering images from a region surrounding the motor vehicle, performing image processing of gathered images, detecting an object in the surrounding of the motor vehicle through said image processing, estimating whether a detected object is a positive object requiring a safety action, and initiating a safety action based on the result of said image processing, **characterized by** performing a long-term analysis to determine whether an object has been falsely estimated as a positive object in said detection and estimation, storing data depending on the result of the false positive analysis, and using said stored data in future object detection and estimation, wherein a prevention of false positive detections is realized by performing a comparison in said detection and estimation means (30) between said data stored in said storage means (25) and corresponding data of a currently detected object, wherein said comparison is based on one or more of
- comparing feature vectors of said currently detected object and said object for which data are stored in said storage means (25);
- comparing weather conditions at the time of detecting said currently detected object to the weather conditions at the time of detecting an object for which data is stored in said storage means (25);
- comparing the image information of said currently detected object and said object for which data are stored in said storage means (25);
- comparing the estimated position of said currently detected object and said object for which data are stored in said storage means (25);
comparing the estimated pose of said currently detected object and said object for which data are stored in said storage means;
- comparing the estimated appearance of said currently detected object and said object for which data are stored in said storage means (25); and/or
- comparing the estimated motion of said currently detected object and said object for which data are stored in said storage means (25).

## Patentansprüche

1. Ein Sichtsystem (10) für ein Kraftfahrzeug, das ein bildgebendes Mittel (11), das dafür ausgelegt ist, Bilder von einem das Kraftfahrzeug umgebenden Gebiet aufzunehmen, ein elektronisches Verarbeitungsmittel (14), das dafür ausgelegt ist, eine Bildverarbeitung der durch das bildgebende Mittel (11) aufgenommenen Bilder auszuführen und auf der Grundlage des Ergebnisses der Bildverarbeitung eine Sicherheitsaktion zu initiieren, ein Datenspeichermittel (25) und eine elektronische Bordsteuereinheit umfasst, wobei das elektronische Verarbeitungsmittel (14) und das Datenspeichermittel (25) in der elektronischen Bordsteuereinheit verwirklicht sind, wobei das elektronische Verarbeitungsmittel (14) ein Detektions- und Schätzmittel (30) umfasst, das dafür ausgelegt ist, durch die Bildverarbeitung ein Objekt in der Umgebung des Kraftfahrzeugs zu detektieren und zu schätzen, ob ein detektiertes Objekt ein positives Objekt ist, das eine Sicherheitsaktion erfordert, **dadurch gekennzeichnet, dass** das elektronische Verarbeitungsmittel (14) ein Mittel (32) zur Analyse falsch positiver Ergebnisse umfasst, das dafür ausgelegt ist, eine Analyse auszuführen, um zu bestimmen, ob ein Objekt durch das Detektions- und Schätzmittel (30) falsch als ein positives Objekt geschätzt worden ist, um Daten in Abhängigkeit von dem Ergebnis der Analyse falsch positiver Ergebnisse in dem Datenspeichermittel (25) zu speichern und die gespeicherten Daten in dem Detektions- und Schätzmittel (30) für die künftige Objektdetektion und -schätzung zu verwenden, wobei durch einen Vergleich, der in dem Detektions- und Schätzmittel (30) zwischen den in dem Speichermittel (25) gespeicherten Daten und entsprechenden Daten eines gegenwärtig detektierten Objekts ausgeführt wird, eine Verhinderung falsch positiver Detektionen verwirklicht wird, wobei der Vergleich auf einem oder mehreren der Folgenden beruht:
- Vergleichen von Merkmalsvektoren des gegenwärtig detektierten Objekts und des Objekts, für das Daten in dem Speichermittel (25) gespeichert sind;
- Vergleichen von Witterungsbedingungen zur Zeit der Detektion des gegenwärtig detektierten Objekts mit den Witterungsbedingungen zur Zeit der Detektion eines Objekts, für das Daten in dem Speichermittel (25) gespeichert sind;
- Vergleichen der Bildinformationen des gegenwärtig detektierten Objekts und des Objekts, für das Daten in dem Speichermittel (25) gespeichert sind;
- Vergleichen der geschätzten Position des gegenwärtig detektierten Objekts und des Objekts, für das Daten in dem Speichermittel (25) gespeichert sind;
- Vergleichen der geschätzten Pose des gegenwärtig detektierten Objekts und des Objekts, für das Daten in dem Speichermittel gespeichert sind;
- Vergleichen des geschätzten Aussehens des gegenwärtig detektierten Objekts und des Objekts, für das Daten in dem Speichermittel (25) gespeichert sind; und/oder
- Vergleichen der geschätzten Bewegung des gegenwärtig detektierten Objekts und des Objekts, für das Daten in dem Speichermittel (25) gespeichert sind.

2. Das Sichtsystem nach Anspruch 1, wobei die Analyse falsch positiver Ergebnisse über einen Entscheidungshorizont des Detektions- und Schätzmittels (30) hinausgeht.

3. Das Sichtsystem nach einem der vorhergehenden Ansprüche, wobei das Mittel (32) zur Analyse falsch positiver Ergebnisse Bilddaten verwendet, die im Vergleich zu den Bilddaten, die durch das Detektions- und Schätzmittel (30) verwendet werden, während einer längeren Zeitdauer erhoben worden sind.

4. Das Sichtsystem nach einem der vorhergehenden Ansprüche, wobei das Mittel (32) zur Analyse falsch positiver Ergebnisse Bilddaten verwendet, die im Vergleich zu den Bilddaten, die durch das Detektions- und Schätzmittel (30) verwendet werden, in kleineren Entfernungen zu dem Objekt erhoben werden.

5. Das Sichtsystem nach einem der vorhergehenden Ansprüche, wobei das Mittel (32) zur Analyse falsch positiver Ergebnisse im Vergleich zu dem Detektions- und Schätzmittel (30) größere Rechenresourcen verwendet.

6. Das Sichtsystem nach einem der vorhergehenden Ansprüche, wobei das Mittel (32) zur Analyse falsch positiver Ergebnisse Informationen von anderen Sensoren oder Systemen (21-23) verwendet.

7. Das Sichtsystem nach einem der vorhergehenden Ansprüche, wobei die gespeicherten Daten Objektbeschreibungsdaten des analysierten Objekts umfassen.

8. Das Sichtsystem nach Anspruch 7, wobei die Objektbeschreibungsdaten eine Position umfassen, die zur Zeit der Detektion des analysierten Objekts von einem Navigationssatellitensystem-Empfänger (21) abgeleitet wird.

9. Das Sichtsystem nach Anspruch 7 oder 8, wobei die Objektbeschreibungsdaten ein oder mehrere der folgenden Datenelemente umfassen:
- die Objektposition relativ zu dem Kraftfahrzeug;
- die Objektpose;
- die Objektbewegung;
- das Objektaussehen;
- Bildinformationen, die sich auf das Objekt beziehen, von dem bildgebenden Mittel;
- die Objektposition in dem Bild;
- den Objekttyp;
- Umgebungsdaten zur Zeit der Objektdetektion;
- Fahrzeugbewegungsdaten zur Zeit der Objektdetektion;
- einen Zeitpunkt, zu dem das Objekt detektiert wurde; und
- einen Merkmalsvektor des Objekts.

10. Das Sichtsystem nach einem der vorhergehenden Ansprüche, wobei der Vergleich ausgeführt wird, falls das Fahrzeug in der Nähe der Position eines Objekts, für das Daten in dem Speichermittel (25) gespeichert sind, ist.

11. Das Sichtsystem nach einem der vorhergehenden Ansprüche, wobei die Analyse wenigstens teilweise ausgeführt wird:
- zu Zeiten, zu denen das Fahrzeug steht;
- wenn keine Objekte detektiert werden; und/oder
- wenn das Risiko einer Kollision für den Fahrer als niedrig geschätzt wird.

12. Das Sichtsystem nach einem der vorhergehenden Ansprüche, wobei das Datenspeichermittel (25) eine Datenbank (34) falsch positiver Ergebnisse umfasst.

13. Ein Sichtverfahren für ein Kraftfahrzeug, das in einer elektronischen Bordsteuereinheit ausgeführt wird, wobei das Verfahren das Aufnehmen von Bildern von einem das Kraftfahrzeug umgebenden Gebiet, das Ausführen einer Bildverarbeitung aufgenommener Bilder, das Detektieren eines Objekts in der Umgebung des Kraftfahrzeugs durch die Bildverarbeitung, das Schätzen, ob ein detektiertes Objekt ein positives Objekt ist, das eine Sicherheitsaktion erfordert, und das Initiieren einer Sicherheitsaktion auf der Grundlage des Ergebnisses der Bildverarbeitung umfasst, **gekennzeichnet durch** das Ausführen einer Langzeitanalyse, um zu bestimmen, ob ein Objekt in der Detektion und Schätzung falsch als ein positives Objekt geschätzt worden ist, das Speichern von Daten in Abhängigkeit von dem Ergebnis der Analyse falsch positiver Ergebnisse und das Verwenden der gespeicherten Daten in einer künftigen Objektdetektion und -schätzung, wobei eine Verhinderung von Detektionen falsch positiver Ergebnisse durch Ausführen eines Vergleichs zwischen den in dem Speichermittel (25) gespeicherten Daten und entsprechenden Daten eines gegenwärtig detektieren Objekts in dem Detektions- und Schätzmittel (30) verwirklicht wird, wobei der Vergleich auf einem oder mehreren der Folgenden beruht:
- Vergleichen von Merkmalsvektoren des gegenwärtig detektierten Objekts und des Objekts, für das Daten in dem Speichermittel (25) gespeichert sind;
- Vergleichen von Witterungsbedingungen zur Zeit der Detektion des gegenwärtig detektierten Objekts mit den Witterungsbedingungen zur Zeit der Detektion eines Objekts, für das Daten in dem Speichermittel (25) gespeichert sind;
- Vergleichen der Bildinformationen des gegenwärtig detektierten Objekts und des Objekts, für das Daten in dem Speichermittel (25) gespeichert sind;
- Vergleichen der geschätzten Position des gegenwärtig detektierten Objekts und des Objekts, für das Daten in dem Speichermittel (25) gespeichert sind;
- Vergleichen der geschätzten Pose des gegenwärtig detektierten Objekts und des Objekts, für das Daten in dem Speichermittel gespeichert sind;
- Vergleichen des geschätzten Aussehens des gegenwärtig detektierten Objekts und des Objekts, für das Daten in dem Speichermittel (25) gespeichert sind; und/oder
- Vergleichen der geschätzten Bewegung des gegenwärtig detektierten Objekts und des Objekts, für das Daten in dem Speichermittel (25) gespeichert sind.

## Revendications

1. Un système de vision (10) pour un véhicule à moteur, comprenant un moyen de formation d'image (11) adapté à recueillir des images d'une région entourant le véhicule à moteur, un moyen de traitement électronique (14) adapté à effectuer un traitement d'image des images recueillies par ledit moyen de formation d'image (11) et initier une action de sécurité sur la base du résultat dudit traitement d'image, un moyen de stockage de données (25) et une unité de commande électronique embarquée, dans lequel ledit moyen de traitement électronique (14) et ledit moyen de stockage de données (25) sont réalisés dans ladite unité de commande électronique embarquée, dans lequel ledit moyen de traitement électronique (14) comprend un moyen de détection et d'estimation (30) adapté à détecter un objet dans l'environnement du véhicule à moteur par ledit traitement d'image et à estimer si un objet détecté est un objet positif nécessitant une action de sécurité, **caractérisé en ce que** ledit moyen de traitement électronique (14) comprend un moyen d'analyse de faux positif (32) adapté à effectuer une analyse pour déterminer si un objet a été faussement estimé comme un objet positif par le moyen de détection et d'estimation (30), à stocker des données en fonction du résultat de l'analyse de faux positif dans ledit moyen de stockage de données (25), et à utiliser lesdites données stockées dans ledit moyen de détection et d'estimation (30) pour la détection et l'estimation futures d'objets, dans lequel une prévention de détections de faux positifs est réalisée par une comparaison effectuée dans ledit moyen de détection et d'estimation (30) entre lesdites données stockées dans ledit moyen de stockage (25) et les données correspondantes d'un objet actuellement détecté, ladite comparaison étant basée sur une ou plusieurs des opérations consistant à :
- comparer des vecteurs d'attributs dudit objet actuellement détecté et dudit objet pour lequel des données sont stockées dans ledit moyen de stockage (25) ;
- comparer les conditions météorologiques au moment de la détection dudit objet actuellement détecté aux conditions météorologiques au moment de la détection d'un objet pour lequel des données sont stockées dans ledit moyen de stockage (25) ;
- comparer les informations d'image dudit objet actuellement détecté et dudit objet pour lequel des données sont stockées dans ledit moyen de stockage (25) ;
- comparer la position estimée dudit objet actuellement détecté et dudit objet pour lequel des données sont stockées dans ledit moyen de stockage (25) ;
- comparer la pose estimée dudit objet actuellement détecté et dudit objet pour lequel des données sont stockées dans ledit moyen de stockage ;
- comparer l'apparence estimée dudit objet actuellement détecté et dudit objet pour lequel des données sont stockées dans ledit moyen de stockage (25) ; et/ou
- comparer le mouvement estimé dudit objet actuellement détecté et dudit objet pour lequel des données sont stockées dans ledit moyen de stockage (25).

2. Le système de vision selon la revendication 1, dans lequel ladite analyse de faux positif s'étend au-delà d'un horizon de décision du moyen de détection et d'estimation (30).

3. Le système de vision selon l'une quelconque des revendications précédentes, dans lequel ledit moyen d'analyse de faux positif (32) utilise des données d'image collectées pendant une période de temps plus longue que les données d'image utilisées par le moyen de détection et d'estimation (30).

4. Le système de vision selon l'une quelconque des revendications précédentes, dans lequel ledit moyen d'analyse de faux positif (32) utilise des données d'image collectées à de plus petites distances de l'objet par rapport aux données d'image utilisées par le moyen de détection et d'estimation (30).

5. Le système de vision selon l'une quelconque des revendications précédentes, dans lequel ledit moyen d'analyse de faux positif (32) utilise des ressources de calcul plus importantes que le moyen de détection et d'estimation (30).

6. Le système de vision selon l'une quelconque des revendications précédentes, dans lequel ledit moyen d'analyse de faux positif (32) utilise des informations provenant d'autres capteurs ou systèmes (21-23).

7. Le système de vision selon l'une quelconque des revendications précédentes, dans lequel lesdites données stockées comprennent des données de description d'objet de l'objet analysé.

8. Le système de vision selon la revendication 7, dans lequel lesdites données de description d'objet comprennent une position dérivée d'un récepteur de système de navigation par satellites (21) au moment de la détection de l'objet analysé.

9. Le système de vision selon la revendication 7 ou 8, dans lequel lesdites données de description d'objet comprennent une ou plusieurs des données suivantes :
- position de l'objet par rapport au véhicule à moteur ;
- pose de l'objet ;
- mouvement de l'objet ;
- apparence de l'objet ;
- informations d'image relatives à l'objet provenant du moyen de formation d'image ;
- position de l'objet dans l'image ;
- type d'objet ;
- données d'environnement au moment de la détection de l'objet ;
- données de mouvement du véhicule au moment de la détection de l'objet ;
- moment où l'objet a été détecté ; et
- un vecteur d'attributs de l'objet.

10. Le système de vision selon l'une quelconque des revendications précédentes, dans lequel ladite comparaison est effectuée si le véhicule est proche de la position d'un objet pour lequel des données sont stockées dans ledit moyen de stockage (25).

11. Le système de vision selon l'une quelconque des revendications précédentes, dans lequel ladite analyse est au moins partiellement effectuée
- lorsque le véhicule est à l'arrêt;
- lorsqu'aucun objet n'est détecté ; et/ou
- lorsque le risque de collision pour le conducteur est estimé faible.

12. Le système de vision selon l'une quelconque des revendications précédentes, dans lequel ledit moyen de stockage de données (25) comprend une base de données de faux positifs (34).

13. Un procédé de vision pour un véhicule à moteur, exécuté dans une unité de commande électronique embarquée, comprenant les étapes consistant à recueillir des images d'une région entourant le véhicule à moteur, effectuer un traitement d'image des images recueillies, détecter un objet dans l'environnement du véhicule à moteur par ledit traitement d'image, estimer si un objet détecté est un objet positif nécessitant une action de sécurité et initier une action de sécurité sur la base du résultat dudit traitement d'image, **caractérisé par** les étapes consistant à effectuer une analyse à long terme pour déterminer si un objet a été faussement estimé comme un objet positif dans ladite détection et estimation, stocker des données en fonction du résultat de l'analyse de faux positif, et utiliser lesdites données stockées dans la détection et l'estimation futures d'objets, dans lequel une prévention de fausses détections positives est réalisée en effectuant une comparaison dans ledit dispositif de détection et d'estimation (30) entre lesdites données stockées dans ledit moyen de stockage de données (25) et les données correspondantes d'un objet actuellement détecté, ladite comparaison étant basée sur un ou plusieurs des opérations consistant à :
- comparer des vecteurs d'attributs dudit objet actuellement détecté et dudit objet pour lequel des données sont stockées dans ledit moyen de stockage (25) ;
- comparer les conditions météorologiques au moment de la détection dudit objet actuellement détecté aux conditions météorologiques au moment de la détection d'un objet pour lequel des données sont stockées dans ledit moyen de stockage (25) ;
- comparer les informations d'image dudit objet actuellement détecté et dudit objet pour lequel des données sont stockées dans ledit moyen de stockage (25) ;
- comparer la position estimée dudit objet actuellement détecté et dudit objet pour lequel des données sont stockées dans ledit moyen de stockage (25) ;
- comparer la pose estimée dudit objet actuellement détecté et dudit objet pour lequel des données sont stockées dans ledit moyen de stockage ;
- comparer l'apparence estimée dudit objet actuellement détecté et dudit objet pour lequel des données sont stockées dans ledit moyen de stockage (25) ; et/ou
- comparer le mouvement estimé dudit objet actuellement détecté et dudit objet pour lequel des données sont stockées dans ledit moyen de stockage (25).
